(19) **Europäisches Patentamt**
**European Patent Office**
**Office européen des brevets**

(11) **EP 2 326 416 B1**

(12) **EUROPÄISCHE PATENTSCHRIFT**

(45) Veröffentlichungstag und Bekanntmachung des Hinweises auf die Patenterteilung:
**21.03.2012 Patentblatt 2012/12**

(21) Anmeldenummer: **10706136.8**

(22) Anmeldetag: **27.01.2010**

(51) Int Cl.:
*B01J 23/58* (2006.01)     *B01J 37/00* (2006.01)
*B01D 53/94* (2006.01)     *B01J 21/10* (2006.01)
*B01J 35/04* (2006.01)     *F01N 3/10* (2006.01)
*B01J 23/63* (2006.01)     *B01J 37/02* (2006.01)

(86) Internationale Anmeldenummer:
**PCT/EP2010/000453**

(87) Internationale Veröffentlichungsnummer:
**WO 2010/097146 (02.09.2010 Gazette 2010/35)**

(54) **STICKOXID-SPEICHERKATALYSATOR ZUM EINSATZ IM KRAFTFAHRZEUG IN MOTORNAHER POSITION**

NITROGEN OXIDE STORAGE CATALYTIC CONVERTER FOR USE IN A MOTOR VEHICLE IN A POSITION NEAR THE ENGINE

CATALYSEUR ACCUMULATEUR DE NOX DESTINÉ À ÊTRE PLACÉ À PROXIMITÉ DU MOTEUR DANS UN VÉHICULE AUTOMOBILE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **27.02.2009 DE 102009010711**

(43) Veröffentlichungstag der Anmeldung:
**01.06.2011 Patentblatt 2011/22**

(73) Patentinhaber: **Umicore AG & Co. KG**
**63457 Hanau-Wolfgang (DE)**

(72) Erfinder:
• HOYER, Ruediger
  63755 Alzenau-Hoerstein (DE)
• ECKHOFF, Stephan
  63755 Alzenau (DE)
• PAULY, Thomas, R.
  63775 Alzenau (DE)

(56) Entgegenhaltungen:
**EP-A1- 1 316 354     EP-A2- 0 945 165**
**WO-A1-2005/092481**

**Beschreibung**

Die Erfindung betrifft einen Autoabgaskatalysator, speziell einen Stickoxid-Speicherkatalysator zum motornahen Einsatz für die Reinigung der Abgase von Otto-Motoren mit Benzin-Direkteinspritzung, die überwiegend mit magerem Luft/Kraftstoff-Gemisch betrieben werden.

Das Abgas von mit überwiegend magerem Luft/Kraftstoff-Gemisch betriebenen Otto-Motoren weist, wenn sich der Motor in den zumeist gebräuchlichen Teillastbetriebspunkten befindet, einen Überschuß an oxidierenden Abgaskomponenten wie Sauerstoff ($O_2$) und Stickoxide ($NO_x$) auf. Typisch für solche Betriebspunkte sind Gehalte von 3 bis 15 Vol.-% Sauerstoff und bis zu 1 Vol.-% Stickoxide. Reduzierende Abgaskomponenten wie Kohlenmonoxid (CO), Kohlenwasserstoffe (HC) und gegebenenfalls Wasserstoff ($H_2$) sind in einem mageren Abgas in der Regel nicht in ausreichender Menge vorhanden, um insbesondere die Stickoxide beispielsweise bei Überleitung über einen konventionellen Dreiwegekatalysator hinreichend entfernen zu können. Eine Möglichkeit zur Reinigung dieser Abgase, insbesondere zur Entfernung der Stickoxide ("Entstickung"), bietet der Einsatz von Stickoxid-Speicherkatalysatoren.

Stickoxid-Speicherkatalysatoren sind im Stand der Technik gut bekannt. Ihre Arbeitsweise wird beispielsweise in der SAE-Schrift SAE 950809 ausführlich beschrieben. Die Reinigungswirkung der Stickoxid-Speicherkatalysatoren beruht darauf, daß in einer mageren Betriebsphase des Motors die Stickoxide vom Speichermaterial des Speicherkatalysators vorwiegend in Form von Nitraten gespeichert werden, und in einer darauffolgenden fetten Betriebsphase des Motors die zuvor gebildeten Nitrate zersetzt und die wieder freiwerdenden Stickoxide mit den reduzierenden Abgasanteilen am Speicherkatalysator zu Stickstoff, Kohlendioxid und Wasser umgesetzt werden.

Es sind unterschiedliche Kompositionen vorgeschlagen worden, die sich als Stickoxid-Speicherkatalysatoren oder für den Einsatz in Stickoxid-Speicherkatalysatoren eignen. Es wird zwischen einem Stickoxid-Speichermaterial und den Stickoxid-Speicherkomponenten unterschieden. Stickoxid-Speicherkomponenten sind zum Beispiel die Oxide, Carbonate oder Hydroxide von Magnesium, Calcium, Strontium, Barium, der Alkalimetalle, der Seltenerdmetalle oder Mischungen davon, die auf Grund ihrer basischen Eigenschaften in der Lage sind, mit den sauren Stickoxiden des Abgases Nitrate zu bilden und sie auf diese Weise abzuspeichern. Ein Stickoxid-Speichermaterial besteht aus den Speicherkomponenten, die zur Erzeugung einer großen Wechselwirkungsfläche mit dem Abgas in möglichst hoher Dispersion auf geeigneten Trägermaterialien abgeschieden sind. Desweiteren sind in Stickoxid-Speicherkatalysatoren in der Regel Edelmetalle wie Platin, Palladium und/oder Rhodium als katalytisch aktive Komponenten enthalten. Aufgabe dieser katalytisch aktiven Komponenten ist es einerseits, unter mageren Bedingungen Stickoxide zu $NO_2$, sowie CO und HC zu $CO_2$ zu oxidieren; und andererseits während der fetten Betriebsphasen, in denen der Stickoxid-Speicherkatalysator "ausgeräumt", d.h. regeneriert wird, freigesetztes $NO_2$ zu Stickstoff zu reduzieren.

EP 1 317 953 bzw. EP1316354 der Anmelderin offenbaren einen Stickoxid-Speicherkatalysator, der eine katalytisch aktive Komponente, wie zum Beispiel Platin, auf einem Trägermaterial und Stickoxidspeicherkomponenten enthält. Als solche werden Oxide, Carbonate oder Hydroxide von Elementen aus der Gruppe bestehend aus Calcium, Strontium, Barium, den Alkalimetallen, den Seltenerdmetallen oder Mischungen davon eingesetzt. Als Trägermaterial für diese Stickoxid-Speicherkomponenten wird gemäß der EP 1 317 953 A1 ein Cer-Zirkon-Mischoxid eingesetzt. Die ausgezeichneten Eigenschaften des Stickoxid-Speicherkatalysators bezüglich der Breite des Temperaturfensters, des Speicherwirkungsgrades und der Alterungsstabilität beruhen wesentlich auf dem für das Platin verwendeten Trägermaterial aus einem homogenen Magnesium-Aluminium-Mischoxid, wobei das Magnesiumoxid in einer Konzentration von 1 bis 40 Gew.-%, bezogen auf das Gesamtgewicht des Mg-Al-Mischoxids, vorliegt. Eine weitere vorteilhafte Variante des Speicherkatalysators erhält man gemäß der EP 1 317 953 A1, wenn das mit Platin katalysierte Mg-Al-Mischoxid durch Imprägnieren zusätzlich mit Ceroxid oder Praseodymoxid dotiert wird.

In der WO 2005/092481 der Anmelderin wird eine verbesserte Ausführungsform des in der EP 1 317 953 A1 beschriebenen Stickoxid-Speicherkatalysators offenbart. Dieser unterscheidet sich von dem Vorläuferkatalysator vor allem dadurch, daß auch als Trägermaterial für die Stickoxid-Speicherkomponente ein homogenes Magnesium-Aluminium-Mischoxid, enthaltend 1 bis 30 Gew.-% Magnesiumoxid, bezogen auf das Gesamtgewicht des Magnesium-Aluminium-Mischoxids" eingesetzt wird.

Sowohl in der EP 1 317 953 A1 als auch in der WO 2005/092481 wird die besondere Eignung von homogenen Magnesium-Aluminium-Mischoxiden mit unterstöchiometrischem Magnesiumoxid-Anteil betont: In beiden Fällen wird der Einsatz eines Magnesium-Aluminium-Mischoxids mit einem Magnesiumoxid-Gehalt von 5 bis 28 Gew.-% als bevorzugt angegeben. Ein solches Material enthält freies, d.h. nicht in die Mischoxidstruktur eingebundenes Aluminiumoxid, welches homogen in $MgAl_2O_4$ verteilt ist.

Weiterhin wird in beiden Offenbarungen betont, daß Sauerstoff speichernde Materialien wie zum Beispiel Materialien auf der Basis von Ceroxid weitere wichtige Komponenten für den Einsatz in diesen Katalysatoren sind. Ceroxid ist auf Grund eines Wechsels in der Oxidationsstufe von +3 nach +4 und umgekehrt in der Lage, im mageren Abgas (Sauerstoffüberschuß) Sauerstoff zu speichern und im fetten Abgas (Sauerstoffmangel) Sauerstoff wieder abzugeben.

Stickoxid-Speicherkatalysatoren, wie sie in EP 1 317 953 A1 und WO 2005/092481 beschrieben sind, haben den Nachteil, daß sie infolge von thermischen Alterungsprozessen, die sowohl die Oxidationskomponente als auch das Stickoxid-Speichermaterial in ihrer Leistungsfähigkeit stark beeinträchtigen, nicht ohne weiteres in motornaher Position zur Reinigung der Abgase von mit überwiegend mit magerem Luft/Kraftstoff-Gemisch betriebenen Otto-Motoren mit Benzin-Direkteinspritzung eingesetzt werden können. Ein Einsatz in dieser Position, in der die Katalysatoren relativ hohen Abgastemperaturen (bis 1000 ˚C) ausgesetzt sein können, ist nur möglich, wenn sehr große Mengen Platin als Oxidationskomponente eingesetzt werden. Typisch für Katalysatoren dieser Art in entsprechenden Anwendungen sind Platingehalte von 1,5 - 4 g/L Platin, bezogen auf das Volumen des eingesetzten Katalysators, was einem derzeitigen Kostenaufwand von 36 - 100 € pro Liter Katalysatorvolumen entspricht. Zudem ist es bei solchen Systemen erforderlich, zusätzlich zum motornahen Katalysator großvolumige Stickoxid-Speicherkatalysatoren im Unterboden entsprechender Kraftfahrzeuge bereit zu stellen, um auch dann noch ausreichende Entstickungswirkungen gewährleisten zu können, wenn infolge der thermischen Alterung des Stickoxid-Speichermaterials insbesondere im motornah angeordneten Katalysator Speicherkapazität irreversibel zerstört ist.

EP 0 945 165 gibt ein Speichermaterial für Schwefeloxide an, das sich für den Einsatz in Kombination mit Stickoxid-Speicherkatalysatoren eignet, die Vergiftungsresistenz dieser Katalysatoren gegenüber Schwefeloxiden erhöht und in bevorzugten Ausführungsformen in den Stickoxid-Speicherkatalysator selbst eingearbeitet werden kann. Dabei handelt es sich um ein $MgO-Al_2O_3$-Mischoxid mit einem molaren Verhältnis von $MgO : Al_2O_3$ von mindestens 1,1 : 1, wobei das darin enthaltene überschüssige Magnesiumoxid homogen im überschüssig vorliegenden Mg/Al-Spinell $MgAl_2O_4$ verteilt ist. Bevorzugte Ausführungsformen dieses $SO_x$-Speichermaterials enthalten 1 bis 40 Gew.-% Erdalkalimetalloxid (CaO, SrO oder BaO) und gegebenenfalls Seltenerdoxid, bevorzugt Ceroxid und Lanthanoxid, in einer Menge von 1 bis 40 Gew.-%, jeweils bezogen auf das Gesamtgewicht des Materials.

Es wurde nun völlig überraschend festgestellt, daß der Einsatz des in der EP 0 945 165 beschriebenen Speichermaterials für Schwefeloxide, genau dann zu einer erheblichen Verbesserung der Alterungsstabilität des Stickoxidspeicherkatalysators führt, wenn das homogene Magnesium-Aluminium-Mischoxid mit einem molaren Verhältnis $MgO : Al_2O_3$ von 1,1 : 1 als Trägermaterial für die Stickoxid-Speicherkomponente eingesetzt wird. Wird die so entstehende Komposition als Beschichtung auf einem inerten Tragkörper aufgebracht und darüber eine konventionelle Dreiwegekatalysatorbeschichtung angeordnet, so ist infolge eines bislang noch nicht vollständig verstandenen Zusammenwirkens der beiden Beschichtungen eine Reduzierung des Platingehaltes in der oxidationsaktiven Komponente des Stickoxid-Speicherkatalysators um 20 bis 80 % auf etwa 0,8 - 1,2 g/L Platin, bezogen auf das Volumen des eingesetzten Katalysators, möglich. Dabei ist jedoch darauf zu achten, daß die zum Einsatz kommende Dreiwegekatalysatorbeschichtung kein Platin enthält. Ein an dieser Stelle eingeführter zusätzlicher Platingehalt würde den erzielten Einsparungseffekt konterkarieren. Vorzugsweise enthält die Dreiwegekatalysatorbeschichtung keine hohen Anteile an sauerstoffspeichernden Materialien, insbesondere kein zusätzliches Cer-Zirkon-Mischoxid. Zusätzliches Sauerstoffspeichermaterial in größeren Mengen würde sich nachteilig auf die Regenerationseigenschaften des Stickoxid-Speicherkatalysators auswirken.

Eine geeignete dreiwegekatalytische Beschichtung ist beispielsweise in EP-B-1 181 970 der Anmelderin beschrieben, auf die hiermit Bezug genommen wird.

Aus den vorstehend beschriebenen Erkenntnissen und Beobachtungen resultiert ein erfindungsgemäßer Stickoxid-Speicherkatalysator mit den Merkmalen des Anspruchs 1. Dieser Katalysator stellt eine erneute Weiterentwicklung des bereits in EP-A-1 317 953 und insbesondere in WO 2005/092481 beschriebenen Typus dar. Hinsichtlich bevorzugter Ausgestaltungen einzelner Komponenten, insbesondere der oxidations- und reduktionsaktiven Komponenten, sowie hinsichtlich der Herstellung der ersten Schicht des erfindungsgemäßen Katalysators wird hiermit auf diese beiden Schriften Bezug genommen.

Wir glauben, daß die beobachtete erhebliche Verbesserung der thermischen Alterungsbeständigkeit des Stickoxid-Speichermaterials darauf beruht, daß in einem homogenen Magnesium-Aluminium-Mischoxid mit einem Magnesiumoxid-Gehalt, der größer 28 Gew.-% ist und 30,3 Gew.-% (- der obere Endpunkt des Bereichs entspricht einem molaren Verhältnis von $MgO : Al_2O_3$ von 1,1 : 1 -) nicht überschreitet, und insbesondere mit dem oberen Endpunkt dieses Bereiches, eine optimale Zusammensetzung gefunden ist, die bezüglich der maßgeblichen Alterungsprozesse im Stickoxid-Speichermaterial nahezu resistent ist.

So kann eine thermische Belastung des Stickoxid-Speichermaterials beispielsweise eine Reaktion zwischen der Stickoxid-Speicherkomponente und dem Trägermaterial hervorrufen, die je nach Reaktionsprodukt irreversibel sein kann. Infolgedessen entsteht in den Stickoxid-Speicherkatalysatoren, die in der EP-A-1 317 953 offenbart sind, Bariumcerat und Bariumzirkonat, wenn eine Bariumverbindung (BaO, $BaCO_3$ oder $Ba(OH)_2$) als Stickoxid-Speicherkomponente auf einem Cer-Zirkon-Mischoxid vorliegt. In den Stickoxid-Speichermaterialien, die in der WO 2005/092481 als bevorzugt beschrieben werden, entsteht infolge der Reaktion der Bariumverbindung mit dem freiem $Al_2O_3$, das im eingesetzten Magnesiumoxid-armen homogenen Mg/Al-Mischoxid vorliegt, Bariumaluminat. Dadurch wird Barium für die Speicherung von Stickoxiden als Nitrat unzugänglich.

Weiterhin führt die Vergiftung durch Schwefeloxide, die, selbst wenn entschwefelter Kraftstoff zum Einsatz kommt, in Spuren im Abgas von mager betriebenen Otto-Motoren vorhanden sind, zur Bildung von Sulfaten mit der Stickoxid-Speicherkomponente, die sich nur bei sehr hohen Temperaturen wieder zersetzen und entfernen lassen. Dieser Prozeß führt ebenfalls zur Verminderung der Stickoxid-Speicherkapazität. Aus eben diesem Grund wird in der EP 0 945 165 der Einsatz einer - gegebenenfalls auch in den Stickoxid-Speicherkatalysator integrierten - "Schwefelfalle" vorgeschlagen, die die Vergiftung des zusätzlich enthaltenen Stickoxid-Speichermaterials verhindern soll. Als Schwefelfalle eignet sich nach dieser Schrift MgO-$Al_2O_3$-Mischoxid mit einem molaren Verhältnis von MgO : $Al_2O_3$ von mindestens 1,1 : 1, insbesondere mit MgO : $Al_2O_3$ > 2 : 1.

Wir glauben, daß durch den Einsatz eines homogenen Magnesium-Aluminium-Mischoxid mit einem Magnesiumoxid-Gehalt x mit 28 Gew.-% < x ≤ 30,3 Gew.-% und insbesondere durch den Einsatz des Oxids mit einem molaren MgO : $Al_2O_3$-Verhältnis von 1,1 : 1 als Trägermaterial für die Stickoxid-Speicherkomponente mehrere Effekte erzielt werden: Zum einen enthält dieses Material kein freies $Al_2O_3$, so daß eine thermisch induzierte Aluminatbildung mangels Edukt nicht erfolgen kann. Zum anderen werden gegebenenfalls im Abgas vorhandene Schwefeloxide in dem darin gegebenenfalls enthaltenen freien MgO gebunden. Zugleich erfolgt durch den hohen Gehalt an $MgAl_2O_4$, das sich unter diesen Bedingungen chemisch inert verhalten sollte, eine exzellente Stabilisierung der aktiven Oberfläche des Stickoxid-Speichermaterials gegen thermisch induzierte Sinterprozesse. Und desweiteren ist der Einsatz einer weiteren basischen Komponente, die Stickoxide und/oder Schwefeloxide speichert, überflüssig. (Im Unterschied dazu werden in den in EP 0 945 165 offenbarten Ausführungsformen immer Kombinationen von Schwefelfalle und Stickoxid-Speichermaterial beschrieben.)

Erfindungsgemäß wird die so erhältliche, als Stickoxid-Speicherkatalysator aktive Komposition, die Platin als katalytisch aktive Komponente aufgebracht auf einem homogenen Magnesium-Aluminium-Mischoxid mit einem Magnesiumoxid-Gehalt zwischen 5 und weniger als 28 Gew.-%, bezogen auf das Gesamtgewicht des Magnesium-Aluminium-Mischoxids, in Kombination mit einem Stickoxid-Speichermaterial enthält, welches eine Stickoxid-Speicherkomponente aufgebracht auf einem homogenen Magnesium-Aluminium-Mischoxid mit einem molaren Verhältnis von MgO zu $Al_2O_3$ von 1,1 : 1 enthält, in Form einer Beschichtung auf einen Tragkörper aufgebracht.

Als Tragkörper eignen sich insbesondere keramische und metallische Durchflußsubstrate, insbesondere Wabenkörper, wie sie für solche Anwendungen üblich und im Stand der Technik bekannt sind. Aber auch Wandflußfiltersubstrate aus Cordierit, Siliciumcarbid oder Aluminiumtitanat können verwendet werden, wenn zugleich die Aufgabe gelöst werden muß, Partikel aus dem zu reinigenden Abgas zu entfernen. In einem solchen Fall ist auf eine in Durchflußrichtung des Abgases sinnvolle Anordnung der Schichten zu achten. Wird die untere, die Stickoxid-Speicherfunktionalitäten enthaltende Beschichtung in die Wand des Filtersubstrates zwischen Einlaß- und Auslaßkanal eingebracht, so muß die dreiwegekatalytisch aktive, obere Beschichtung in den Einlaßkanälen auf die Wand appliziert werden. Wird hingegen die dreiwegekatalytisch aktive Beschichtung in die Wand zwischen Einlaß-und Auslaßkanal eingebracht, so muß die die Stickoxid-Speicherfunktionalität enthaltende, untere Schicht in den Auslaßkanälen auf die Wand aufgebracht werden.

Je nach Zielanwendung kann die als Stickoxid-Speicherkatalysator aktive Komposition in der unteren, direkt auf den Tragkörper aufgebrachten Beschichtung in ihren bevorzugten Ausgestaltungen variieren.

So eignen sich als Stickoxid-Speicherkomponenten Oxide, Hydroxide, Oxidhydroxide, Carbonate oder Hydrogencarbonate der Alkalimetalle, der Erdalkalimetalle, des Lanthans und der Lanthanoide (Ce - Lu); bevorzugt sind entsprechende Verbindungen des Natriums, Kaliums, Strontiums, Bariums und Lanthans. Besonders bevorzugt ist der Einsatz von Oxiden, Hydroxiden, Oxidhydroxiden und Carbonaten des Strontiums und des Bariums, sowie Mischungen davon.

Typischerweise werden 0,5 bis 20 Gew.-% der Stickoxid-Speicherkomponente, berechnet als Oxid und bezogen auf das Gesamtgewicht des resultierenden Stickoxid-Speichermaterials, auf das als Trägermaterial verwendete Magnesium-Aluminium-Mioschoxid aufgebracht. Bevorzugt enthält das Stickoxid-Speichermaterial 5 bis 18 Gew.-%, besonders bevorzugt 12 bis 17 Gew.-% der Stickoxid-Speicherkomponenten, berechnet als Oxid und bezogen auf das Gesamtgewicht des Stickoxid-Speichermaterials.

Das als Trägermaterial für die Stickoxid-Speicherkomponente eingesetzte Magnesium-Aluminium-Mischoxid mit einem molaren Verhältnis von MgO zu $Al_2O_3$ von 1,1 : 1 kann in bevorzugten Ausführungsformen vor Aufbringung der Stickoxid-Speicherkomponente mit Ceroxid oder Manganoxid belegt werden. Dazu können literaturbekannte Verfahren angewandt werden, beispielsweise die porenfüllende Imprägnierung des Mg/Al-Mischoxids mit der wässrigen Lösung einer löslichen Vorstufe dieser Verbindungen wie zum Beispiel mit Cer(III)-nitratlösung oder Mangan(II)-nitratlösung, mit anschließender Kalzination. In bevorzugten Ausführungsformen enthält das Trägermaterial vor Aufbringen der Stickoxid-Speicherkomponente 0,5 bis 20 Gew.-% Ceroxid oder Manganoxid ($MnO_2$) oder Mischungen davon, bezogen auf das Gesamtgewicht des Trägermaterials, besonders bevorzugt 8 bis 15 Gew.-%.

Die untere Beschichtung enthält erfindungsgemäß Platin als katalytisch aktive Komponente aufgebracht auf einem homogenen Magnesium-Aluminium-Mischoxid mit einem Magnesiumoxid-Gehalt zwischen 5 und weniger als 28 Gew.-%, bezogen auf das Gesamtgewicht des Magnesium-Aluminium-Mischoxids. Bevorzugt enthält dieses Magnesium-Aluminium-Mischoxid weiterhin 0,5 bis 20 Gew.-% Selten-Erd-Oxide, insbesondere Ceroxid, bezogen auf das Gesamtgewicht des Trägermaterials, besonders bevorzugt 8 bis 15 Gew.-%.

Auf diesem Mischoxid werden typischerweise 0,3 bis 10 Gew.-% Platin, bezogen auf das resultierende Gesamtgewicht von Platin und Trägermaterial geträgert. Zusätzlich zu Platin werden in bevorzugten Ausführungsformen 0,05 bis 10 Gew.-% eines weiteren Edelmetalls ausgewählt aus der Gruppe bestehend aus Gold, Palladium und Rhodium aufgebracht, wiederum bezogen auf das resultierende Gesamtgewicht von Edelmetall und Trägermaterial. Besonders bevorzugt ist Palladium.

Zusätzlich zu Platin-haltiger Komponente und Stickoxid-Speichermaterial kann die untere, direkt auf den Tragkörper aufgebrachte Beschichtung Bestandteile enthalten, die die Reduktion der Stickoxide befördert. Als solche wird bevorzugt Rhodium aufgebracht auf einem hochoberflächigen Trägermaterial, insbesondere Aluminiumoxid, eingesetzt, doch sind auch andere gleichwirkende Edelmetall- und Nichtedelmetall-haltige Komponenten möglich.

Je nach Endanwendung des Katalysator kann es notwendig sein, bereits bei der Komposition des Katalysators Voraussetzungen für eine mögliche Überwachung seiner Funktionsweise während des Fahrbetriebes (sog. "On-Board-Diagnostic" OBD) zu schaffen. Hierzu ist es erforderlich, daß der Katalysator gewisse Mengen aktives Sauerstoffspeichermaterial enthält. Aus Gründen, die nachstehend noch erläutert werden, ist es nachteilig, dieses Sauerstoffspeichermaterial in der oberen Schicht anzuordnen. In bevorzugten Ausführungsformen, die zum Einsatz in Fahrzeugen mit OBD vorgesehen sind, wird daher der unteren Beschichtung desweiteren ein Cer/Zirkon-Mischoxid zugesetzt, das weitere Selten-Erdmetalle ausgewählt aus der Gruppe bestehend aus Yttrium, Lanthan, Praseodym, Neodym, Samarium und Mischungen davon enthalten kann. Dieses Cer/Zirkon-Mischoxid ist zur Bereitstellung einer für diesen Zweck hinreichenden Sauerstoffspeicheraktivität bevorzugt mit 0,05 bis 5 Gew.-% Rhodium oder Platin, bezogen auf das Gesamtgewicht aus Edelmetall und Mischoxid belegt.

Auf die erste, untere Beschichtung wird erfindungsgemäß eine weitere, dreiwegekatalytisch aktive Beschichtung über die gesamte Substratlänge aufgebracht. Diese enthält erfindungsgemäß Palladium aufgebracht auf Aluminiumoxid und Bariumoxid oder Strontiumoxid, aber nicht Platin. Bevorzugte Ausgestaltungen solcher Beschichtungen und ihre Herstellung sind in der EP-B-1 181 970 offenbart, auf die hiermit Bezug genommen wird.

Für die Verwendung als motornaher Stickoxid-Speicherkatalysator ist es, wie bereits erwähnt, desweiteren vorteilhaft, wenn die zweite Schicht keine sauerstoffspeichernden Materialien, insbesondere kein Cer-Zirkon-Mischoxid enthält. Ist in dieser zweiten, oberen Schicht zusätzliches Sauerstoffspeichermaterial in größeren Mengen vorhanden, so muß der darin während magerer Betriebsphasen gespeicherte Sauerstoff zu Beginn der Fettphasen, während der eigentlich der darunter liegende Stickoxid-Speicher regeneriert werden soll, zunächst reduziert werden. Bevor ein in der oberen Schicht vorhandener Sauerstoffspeicher nicht "ausgeräumt" und der Sauerstoff daraus vollständig reduziert ist, gelangen reduzierende Abgaskomponenten nicht in ausreichender Menge in die untere Schicht zum Stickoxid-Speicher, so daß die daraus desorbierten Stickoxide zunächst nicht reduziert werden können. Diese Verzögerung bis zur eigentlichen Regeneration des Stickoxid-Speichers bedingt eine Verlängerung der Fettphase und verursacht im Fahrzeug somit einen unerwünschten Mehrverbrauch an Kraftstoff.

Die obere, dreiwegekatalytische Beschichtung trägt dann besonders gut zur verbesserten Temperaturstabilität des Katalysators bei, wenn die Einbringung des Palladiums und dessen Fixierung auf dem Trägermaterial Aluminiumoxid mit Bariumhydroxid oder Strontiumhydroxid als Fällungsmittel erfolgt. Ein bevorzugter Herstellungsweg für eine Beschichtungssuspension zur Aufbringung der zweiten Schicht im erfindungsgemäßen Katalysator ist in EP-B-1 181 970 beschrieben.

Demnach wird zur Herstellung der Beschichtungssuspension wie folgt vorgegangen: Aluminiumoxid und hydratisiertes Barium- oder Strontiumhydroxid werden in Wasser suspendiert, wobei sich Barium- oder Strontiumhydroxid löst und zur Verschiebung des pH-Wert der Suspension in den basischen Bereich führt. Danach wird eine wässrige Lösung einer sauren Vorstufe von Palladium, bevorzugt Palladiumnitrat, der Suspension unter ständigem Rühren mittels Kapillarinjektion zugeführt, das heißt Palladiumnitrat wird mit Hilfe von Kapillaren, deren Öffnungen unter der Oberfläche der Suspension enden, injiziert. Gleichzeitig wird die Suspension intensiv gerührt, um eine möglichst schnelle und homogene Verteilung des Palladiumnitrats in der Suspension zu gewährleisten. Nach Beendigung der Zugabe von Palladiumnitrat wird die Suspension noch eine Zeit lang gerührt, um die Fixierung von Palladium und Barium in innigem Kontakt zueinander auf der Oberfläche des Aluminiumoxids zu ermöglichen. Durch die Zugabe der sauren Palladiumnitrat-Lösung wird der pH-Wert der Suspension in den neutralen Bereich verschoben. Die resultierende Suspension kann direkt zur Beschichtung des bereits mit der ersten, unteren Schicht belegten Tragkörpers nach bekannten Verfahren eingesetzt werden.

Dieser Präparationsweg führt dazu, daß in den resultierenden besonders bevorzugten Ausführungsformen des erfindungsgemäßen Katalysators in der zweiten Schicht Bariumoxid oder Strontiumoxid und Palladium gemeinsam auf dem Trägermaterial Aluminiumoxid abgeschieden sind. Zudem liegt die mittlere Partikelgröße der Palladiumkristallite in der derart hergestellten Beschichtung zwischen 3 und 7 nm.

Um die Alterungsstabilität des Katalysators weiter zu erhöhen, können die als Trägermaterialien für Aktivkomponenten (Edelmetalle; Stickoxid-Speicherkomponente) vorgesehenen hochoberflächigen Oxide in hochtemperaturstabiler Form eingesetzt werden. Solche hochtemperaturstabilen Oxide unterscheiden sich von den hochoberflächigen Standardmaterialien meist dadurch, daß sie mit einem die Kristallstruktur stabilisierenden Dotierungsmaterial versehen sind. Beispielsweise wird die Temperaturstabilität von Aluminiumoxid durch Dotierung mit 1 bis 10 Gew.-% Selten-Erd-Sesquioxid (bevorzugt $La_2O_3$) signifikant erhöht. Entsprechende Materialien sind in der Literatur ausführlich beschrieben und dem Fachmann gut bekannt.

Der vorstehend mit seinen bevorzugten Ausführungsformen beschriebene erfindungsgemäße Katalysator eignet sich aufgrund seiner außerordentlich hohen Alterungsstabilität und der ihm innewohnenden kombinierten Funktionalität als Stickoxid-Speicherkatalysator und Dreiwegekatalysator insbesondere zum motornahen Einsatz für die Reinigung der Abgase von Otto-Motoren mit Benzin-Direkteinspritzung, die überwiegend mit magerem Luft/Kraftstoff-Gemisch betrieben werden.

Da in motornaher Position nicht selten nur Bauraum für kleinere Katalysatoren zur Verfügung steht, deren Leistungsfähigkeit insbesondere bei großvolumigen Motoren unter Umständen nicht ausreichend ist, und zudem neben Kohlenmonoxid, Restkohlenwasserstoffen und Stickoxiden gegebenenfalls weitere Rohemissionsbestandteile wie beispielsweise Partikel entfernt werden müssen, kann die Kombination mit weiteren Abgasreinigungsaggregaten hilfreich und somit bevorzugt sein.

So führt beispielsweise die zusätzliche abströmseitige Anordnung eines Partikelfilters zu einer verbesserten Reinigungswirkung. Dabei kann das Partikelfilter unbeschichtet sein oder eine katalytisch aktive Beschichtung enthalten. Besonders bevorzugt sind Partikelfilter, die eine oxidationskatalytisch aktive Beschichtung, eine Beschichtung mit Stickoxid-Speichermaterial oder eine SCR-katalytisch aktive Beschichtung enthalten.

Desweiteren kann die abströmseitige Anordnung eines weiteren Katalysators zur Entfernung von Stickoxiden vorteilhaft sein. Dabei kann es sich um einem SCR-Katalysator oder um einen Stickoxid-Speicherkatalysator handeln. Bei Verwendung eines SCR-Katalysators kann das für die SCR-Reaktion benötigte Reduktionsmittel während längerer fetter Betriebsphasen über dem motornahen erfindungsgemäßen Katalysator erzeugt werden. Gegebenenfalls kann aber auch die Anordnung einer Vorrichtung zur Einbringung von Reduktionsmittel in den Abgasstrang vor Eintritt in den SCR-Katalysator und somit zwischen den erfindungsgemäßen motornahen und den SCR-Katalysator vorteilhaft sein.

Die Erfindung wird nachfolgend anhand eines Ausführungsbeispiels erläutert. Darin zeigt:

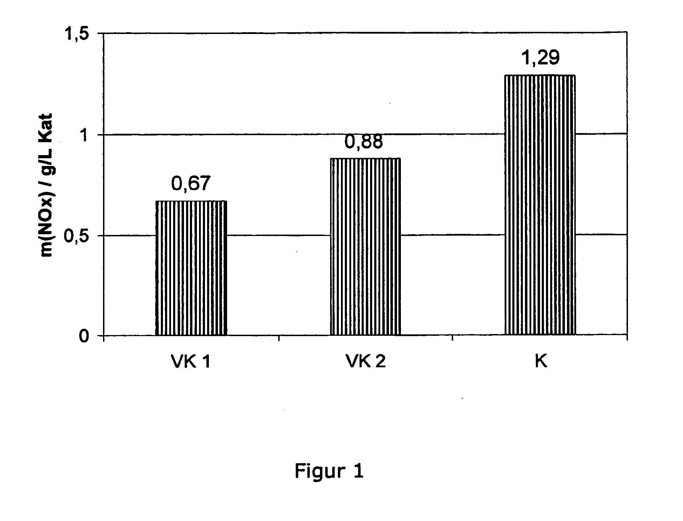

Figur 1: Vergleich der $NO_x$-Speicherkapazität eines erfindungsgemäßen Katalysators K und eines Katalysators nach dem Stand der Technik VK bei einer Abgastemperatur von 350˚C, nach thermischer Alterung bei 950˚C in Luft für die Dauer von 24 Stunden

## Vergleichsbeispiel 1:

Es wurde ein Katalysator im Sinne der WO 2005/092481 angefertigt. Hierzu wurde zunächst ein homogenes Magnesium-Aluminium-Mischoxid mit einem Gewichtsverhältnis der oxidischen Komponenten $Al_2O_3$ : MgO = 80 : 20 durch Imprägnieren mit Cernitrat und anschließendes Kalzinieren mit Ceroxid dotiert. Im dotierten Trägermaterial lagen die oxidischen Komponenten mit folgendem Gewichtsverhältnis zueinander vor:

$$Al_2O_3 : MgO : CeO_2 = 72 : 18 : 10$$

150,4 g des fertigen Trägermaterials wurden mit einer wässrigen Lösung von in Ethanolamin gelöster Hexahydroxoplatinsäure ($H_2Pt(OH)_6$) imprägniert, getrocknet und bei 500˚C an Luft kalziniert, so daß es 2,4 g Platin enthielt.

62,5 g desselben Trägermaterials wurden zur Anfertigung von $NO_x$-Speichermaterial mit Bariumacetat imprägniert und anschließend bei 500˚C für die Dauer von 2 Stunden kalziniert. Das fertige $NO_x$-Speichermaterial enthielt 12,5 g Barium, berechnet als Oxid.

Zur Anfertigung eines weiteren $NO_x$-Speichermaterials gemäß der EP 1 317 953 wurden 65,3 g eines homogenen, mit Lanthan-sesquioxid dotierten Cer/Zirkon-Mischoxids ($CeO_2$ : $ZrO_2$ : $La_2O_3$ = 86 : 10 : 4) mit Bariumacetet imprägniert, getrocknet und anschließend bei 500˚C für die Dauer von 2 Stunden kalziniert. Das fertige $NO_x$-Speichermaterial enthielt 13,01 g Barium, berechnet als Oxid.

Desweiteren wurde noch ein Rhodium-haltiges Pulver angefertigt durch Imprägnierung von 7,7 g mit 4 Gew.-% $La_2O_3$ stabilisierten Aluminiumoxids mit salpetersaurer Rhodiumnitratlösung, Trocknung und anschließende Kalzination bei 500˚C für die Dauer von 2 Stunden. Das fertige Pulver enthielt 0,29 g Rhodium.

Die fertigen Pulver wurden zusammen mit 5 g MgO als Magnesiumacetatlösung und 0,82 g Palladium als Palladiumnitratlösung in Wasser suspendiert. Die Suspension wurde auf eine Partikelgröße von 3 bis 5 $\mu$m ($d_{50}$) gemahlen und mittels Tauchverfahren auf einen handelsüblichen Wabenkörper aus Cordierit mit 62 Zellen pro Quadratzentimeter aufgebracht. Der derart beschichtete Wabenkörper wurde bei 120˚C im Trockenschrank getrocknet und anschließend bei 500˚C für die Dauer von 2 Stunden kalziniert.

**Beispiel:**

Zur Anfertigung eines erfindungsgemäßen Katalysators wurde wiederum zunächst ein homogenes Magnesium-Aluminium-Mischoxid mit einem Gewichtsverhältnis der oxidischen Komponenten $Al_2O_3$ : MgO = 80 : 20 durch Imprägnieren mit Cernitrat und anschließendes Kalzinieren mit Ceroxid dotiert. Im dotierten Trägermaterial lagen die oxidischen Komponenten mit folgendem Gewichtsverhältnis zueinander vor:

$Al_2O_3$ : MgO : $CeO_2$ = 72 : 18 : 10

65,15 g des fertigen Trägermaterials wurden mit einer wässrigen Lösung von in Ethanolamin gelöster Hexahydroxoplatinsäure ($H_2Pt(OH)_6$) imprägniert, getrocknet und bei 500˚C an Luft kalziniert, so daß es 1,06 g Platin enthielt.

Zur Anfertigung eines $NO_x$-Speichermaterials wurde ein homogenes Magnesium-Aluminium-Mischoxid enthaltend 30,3 Gew.-% MgO (entsprechend einem molaren Verhältnis von MgO : $Al_2O_3$ von 1,1 : 1) durch Imprägnieren mit Cernitrat und anschließendes Kalzinieren mit Ceroxid dotiert. Im resultierenden dotierten Trägermaterial lagen die oxidischen Komponenten mit folgendem Gewichtsverhältnis zueinander vor:

$Al_2O_3$ : MgO : $CeO_2$ = 63 : 27 : 10

108,3 g des fertigen Trägermaterials wurden mit wässriger Bariumacetatlösung imprägniert und anschließend bei 500˚C für die Dauer von 2 Stunden kalziniert. Das fertige $NO_x$-Speichermaterial enthielt 21,7 g Barium, berechnet als Oxid.

Weiterhin wurde noch ein Rhodium-haltiges Pulver angefertigt durch Imprägnierung von 3 g mit 4 Gew.-% $La_2O_3$ stabilisierten Aluminiumoxids mit salpetersaurer Rhodiumnitratlösung, Trocknung und anschließende Kalzination bei 500˚C für die Dauer von 2 Stunden. Das fertige Pulver enthielt 0,12 g Rhodium.

Die fertigen Pulver wurden zusammen mit 3 g MgO als Magnesiumacetatlösung und 0,106 g Palladium als Palladiumnitratlösung in Wasser suspendiert. Die Suspension wurde auf eine Partikelgröße von 3 bis 5 $\mu$m ($d_{50}$) gemahlen und mittels Tauchverfahren auf einen handelsüblichen Wabenkörper aus Cordierit mit 62 Zellen pro Quadratzentimeter aufgebracht. Der beschichtete Wabenkörper wurde bei 120˚C im Trockenschrank getrocknet und anschließend bei 500˚C für die Dauer von 2 Stunden kalziniert.

Auf den derart hergestellten beschichteten Wabenkörper wurde noch eine zweite Beschichtung appliziert. Hierzu wurde zunächst eine wässrige Beschichtungssuspension angefertigt, die 85,18 g eines mit 3 Gew.-% $La_2O_3$ stabilisierten Aluminiumoxids, 8 g Barium, berechnet als Oxid, in Form von Bariumhydroxid-octahydrat und 2,83 g Palladium in Form von Palladiumnitrat enthielt. Diese Beschichtungssuspension wurde ebenfalls auf eine Partikelgröße von 3 bis 5 $\mu$m ($d_{50}$) vermahlen und mittels herkömmlichem Tauchverfahren auf den bereits einfach beschichteten Wabenkörper aufgebracht. Es erfolgte eine erneute Trocknung bei 120˚C im Trockenschrank gefolgt von einer Kalzination an Luft bei 500˚C für die Dauer von 2 Stunden.

Der im Beispiel hergestellte erfindungsgemäße Katalysator wies gegenüber dem Katalysator nach dem Stand der Technik aus Vergleichsbeispiel 1 verminderte Edelmetallkosten auf. Die Kostenersparnis lag - nach aktuell gültigen Edelmetallpreisen - bei rund 30,-- € pro Liter Katalysatorvolumen.

**Vergleichsbeispiel 2:**

Es wurde ein weiterer Vergleichskatalysator hergestellt, der sich von dem im Beispiel beschriebenen erfindungsgemäßen Katalysator nur dadurch unterschied, daß zur Anfertigung des $NO_x$-Speichermaterials ein homogenes Magnesium-Aluminium-Mischoxid mit einem Gewichtsverhältnis der oxidischen Komponenten $Al_2O_3$ : MgO = 80 : 20 eingesetzt wurde, das durch Imprägnierung mit Cernitrat und anschließendes Kalzinieren mit Ceroxid dotiert wurde. Zur Herstellung des $NO_x$-Speichermaterials wurde also wiederum ein Trägermaterial eingesetzt, in dem die oxidischen Komponenten mit folgendem Gewichtsverhältnis zueinander vorlagen:

$Al_2O_3$ : MgO : $CeO_2$ = 72 : 18 : 10

Ansonten erfolgte die Herstellung des Vergleichskatalysators in völliger Übereinstimmung mit dem im Beispiel geschilderten Vorgehen.

Den im Beispiel und in den Vergleichsbeispielen hergestellten beschichteten Wabenkörpern wurden Prüflinge in Form von Bohrkernen mit einem Durchmesser von 25,4 mm und einer Länge von 76,2 mm entnommen.

Diese Bohrkerne (VK1 = Bohrkern aus dem in Vergleichsbeispiel 1 hergestellten Katalysator nach dem Stand der Technik; VK2 = Bohrkern aus dem in Vergleichsbeispiel 2 hergestellten Vergleichskatalysator; K = Bohrkern aus dem im Beispiel hergestellten erfindungsgemäßen Katalysator) wurden in einem Ofen an Luft bei 950˚C für die Dauer von 24 Stunden thermisch behandelt und somit einer synthetischen thermischen Alterung ausgesetzt. Anschließend wurden die Prüflinge in einer Labor-Modellgasanlage untersucht.

**Testbedingungen:**

In einer Labor-Modellgasanlage wurde die Stickoxid-Speicherkapazität der thermisch vorgehandelten ("gealterten") Prüflinge VK 1 (Katalysator nach Stand der Technik aus Vergleichsbeispiel 1), VK 2 (Vergleichskatalysator aus Vergleichsbeispiel 2) und K (erfindungsgemäßer Katalysator aus Beispiel) bestimmt. Dazu wurden die Prüflinge nacheinander in den Reaktor der Modellgasanlage eingebaut und der folgenden vierstufigen Testprozedur unterzogen:

1. Aufheizen auf 550˚C mit einer Heizrate von 60˚ pro Minute unter periodisch wechselnden fetten und mageren Abgaszusammensetzungen (Fett/Mager-Zyklen) *ohne NO$_x$* bei einer Katalysatorbelastung GHSV von 30.000 h$^{-1}$;

2. Ausheizen des Katalysators bei 550˚C unter periodisch wechselnden fetten und mageren Abgaszusammensetzungen (Fett/Mager-Zyklen) *ohne NO$_x$* bei einer Katalysatorbelastung GHSV von 30.000 h$^{-1}$;

in den Schritten 1.) und 2.) wurden folgende Abgaszusammensetzungen eingestellt:

| Komponente im: | Magerbetrieb | Fettbetrieb |
|---|---|---|
| CO [Vol.-%] | 0 | 4 |
| H$_2$ [Vol.-%] | 0 | 1,3 |
| O$_2$ [Vol.-%] | 8 | 0 |
| NO [Vppm] | 0 | 0 |
| CO$_2$ [Vppm] | 10 | 10 |
| H$_2$O [Vol.-%] | 10 | 10 |
| **Dauer [sec]** | **80** | **10** |

3. Abkühlen des Katalysators unter Stickstoff auf eine Temperatur von 350˚C mit einer Temperaturrampe von 40˚ pro Minute bei einer Katalysatorbelastung von 30.000 h$^{-1}$;

4. Beladen des Katalysators mit Stickoxiden bis zur vollständigen Sättigung in magerem Abgas bei einer Katalysatorbelastung GHSV von 30.000 h$^{-1}$ über einen Zeitraum von 40 Minuten; dabei wurde die folgenden Abgaszusammensetzung eingestellt:

| Komponente im: | Magerbetrieb |
|---|---|
| CO [Vol.-%] | 0 |
| H$_2$ [Vol.-%] | 0 |
| O$_2$ [Vol.-%] | 8 |
| NO [Vppm] | 500 |
| CO$_2$ [Vppm] | 10 |
| H$_2$O [Vol.-%] | 10 |

Nach Durchlaufen der vierten Stufe der Testprozedur wurde die Stickoxid-Speicherkapazität der Prüflinge aus den während der vierten Stufe vor Katalysator eingestellten und nach Katalysator gemessenen Stickoxid-Konzentrationen im Abgas wie folgt berechnet:

$$m(NO_x) = \int_{t=0\,min}^{t=40\,min} \frac{(c^{EIN}(NO_x) - c^{AUS}(NO_x)) \cdot \dot{V} \cdot M_{NO_2}}{V_m \cdot V_{Kat}}$$

Hierin bezeichnet:

m(NO$_x$)        die im Katalysator eingespeicherte Menge NO$_x$ in Gramm pro Liter Katalysatorvolumen [g/L]

C$^{EIN}$ (NO$_x$)        die Konzentration NO$_x$ im Abgas vor Katalysatoreintritt

$C^{AUS}(NO_x)$    die Konzentration $NO_x$ im Abgas nach Katalysatoraustritt

$\dot{\overline{V}}$    der eingestellte Abgasvolumenstrom

$M_{NO2}$    die Molmasse von $NO_2$

$V_m$    das molare Volumen

$V_{Kat}$    das Volumen des Katalysatorprüflings.

Das Ergebnis dieser Untersuchungen ist in Figur 1 dargestellt.

Figur 1 zeigt die $NO_x$-Speicherkapazität des erfindungsgemäßen Katalysators K im Vergleich zu VK1, dem Katalysator nach dem Stand der Technik aus dem Vergleichsbeispiel 1 und im Vergleich zu einem Vergleichskatalysator VK 2, der sich vom erfindungsgemäßen Katalysator nur dadurch unterscheidet, daß die Speicherkomponente aufgebracht ist auf einem homogenen Magnesium-Aluminium-Mischoxid mit einem molaren Verhältnis von MgO zu $Al_2O_3$, welches kleiner ist als 1,1 : 1. Die gezeigten $NO_x$-Speicherkapazitäten wurden beobachtet bei einer Abgastemperatur von 350˚C, nachdem die Katalysatoren bei 950˚C in Luft für die Dauer von 24 Stunden thermisch vorbehandelt ("gealtert") wurden. Der erfindungsgemäße Katalysator zeigt nach Alterung eine fast doppelt so hohe Stickoxid-Speicherkapazität wie der Katalysator nach dem Stand der Technik VK 1 und somit eine deutlich geringere thermische Schädigung. Dabei weist der erfindungsgemäße Katalysator erheblich geringere Edelmetallkosten pro Liter Katalysatorvolumen auf.

Der erfindungsgemäße Katalysator K zeigt auch eine erheblich bessere $NO_x$-Speicherkapazität als der Vergleichskatalysator VK 2, in dem lediglich ein anderes homogenes Magnesium-Aluminium-Mischoxid als Träger für die Stickoxid-Speicherkomponente eingesetzt wurde. Dieses Ergebnis belegt, daß die am erfindungsgemäßen Katalysator beobachtete Verbesserung der Alterungsstabilität maßgeblich durch die Wahl des homogenen Magnesium-Aluminium-Mischoxids, welches als Trägermaterial für die $NO_x$-Speicherkomponente eingesetzt wird, bestimmt wird. Es belegt weiterhin, daß die beobachtete Verbesserung der Alterungsstabilität, die die beschriebenen Edelmetalleinsparungen ermöglicht, nicht erhältlich ist durch einfache Kombination einer Stickoxid-Speicherbeschichtung gemäß EP 1 317 953 oder gemäß WO 2005/092481 mit einer herkömmlichen dreiwegekatalytisch aktiven Beschichtung gemäß EP EP 1 181 970

## Patentansprüche

1.    Stickoxid-Speicherkatalysator aus mindestens zwei katalytisch aktiven Beschichtungen auf einem Tragköper, wobei die untere, direkt auf dem Tragkörper aufgebrachte Beschichtung Platin als katalytisch aktive Komponente aufgebracht auf einem homogenen Magnesium-Aluminium-Mischoxid mit einem Magnesiumoxid-Gehalt zwischen 5 und weniger als 28 Gew.-%, bezogen auf das Gesamtgewicht des Magnesium-Aluminium-Mischoxids, in Kombination mit einem Stickoxid-Speichermaterial enthält, und
wobei die darauf aufgebrachte zweite Schicht Palladium aufgebracht auf Aluminiumoxid und Bariumoxid oder Strontiumoxid, aber nicht Platin enthält,
**dadurch gekennzeichnet,**
**dass** das Stickoxid-Speichermaterial eine Stickoxid-Speicherkomponente aufgebracht auf einem homogenen Magnesium-Aluminium-Mischoxid mit einem molaren Verhältnis von MgO zu $Al_2O_3$ von 1,1 : 1 enthält.

2.    Stickoxid-Speicherkatalysator nach Anspruch 1,
**dadurch gekennzeichnet,**
**dass** die zweite Schicht keine sauerstoffspeichernden Materialien, insbesondere kein Cer-Zirkon-Mischoxid enthält.

3.    Stickoxid-Speicherkatalysator nach Anspruch 1 oder 2,
**dadurch gekennzeichnet,**
**daß** in der zweiten Schicht Bariumoxid oder Strontiumoxid und Palladium gemeinsam auf dem Trägermaterial Aluminiumoxid abgeschieden sind.

4.    Stickoxid-Speicherkatalysator nach einem der Ansprüche 1 bis 3,
**dadurch gekennzeichnet,**
**daß** als Stickoxid-Speicherkomponente Oxide, Hydroxide, Oxidhydroxide oder Carbonate des Strontiums oder Bariums, oder Mischungen davon enthalten sind.

**5.** Stickoxid-Speicherkatalysator nach Anspruch 4,
**dadurch gekennzeichnet,**
**daß** das als Trägermaterial für die Stickoxid-Speicherkomponente eingesetzte Magnesium-Aluminium-Mischoxid mit einem molaren Verhältnis von MgO zu $Al_2O_3$ von 1,1 : 1 weiterhin 0,5 bis 20 Gew.-% Ceroxid oder Manganoxid ($MnO_2$) oder Mischungen davon enthält, bezogen auf das Gesamtgewicht dieses Trägermaterials.

**6.** Stickoxid-Speicherkatalysator nach Anspruch 4 oder 5,
**dadurch gekennzeichnet,**
**daß** das als Trägermaterial für Platin eingesetzte Magnesium-Aluminium-Mischoxid weiterhin 0,5 bis 20 Gew.-% Ceroxid enthält, bezogen auf das Gesamtgewicht dieses Trägermaterials.

**7.** Stickoxid-Speicherkatalysator nach Anspruch 6,
**dadurch gekennzeichnet,**
**daß** auf dem als Trägermaterial für Platin eingesetzten Magnesium-Aluminium-Mischoxid zusätzlich 0,05 bis 10 Gew.-% eines weiteren Edelmetalls ausgewählt aus der Gruppe bestehend aus Gold, Palladium und Rhodium aufgebracht ist, bezogen auf das resultierende Gesamtgewicht von Edelmetall und diesem Trägermaterial.

**8.** Stickoxid-Speicherkatalysator nach Anspruch 1,
**dadurch gekennzeichnet,**
**daß** die untere, direkt auf den Tragkörper aufgebrachte Beschichtung zusätzlich ein mit 0,05 bis 5 Gew.-% Rhodium oder Platin belegtes Cer/Zirkon-Mischoxid enthält, welches weitere Selten-Erdmetalle ausgewählt aus der Gruppe bestehend aus Yttrium, Lanthan, Praseodym, Neodym, Samarium und Mischungen davon enthalten kann, wobei die Gehaltsangabe bezogen ist auf das Gesamtgewicht aus Edelmetall und diesem Cer/Zirkon-Mischoxid.

**9.** Verfahren zur Reinigung der Abgase von Otto-Motoren mit Benzin-Direkteinspritzung, die überwiegend mit magerem Luft/KraftstoffGemisch betrieben werden, durch Kontaktierung der Abgase mit einem Katalysator nach einem der Ansprüche 1 bis 8, der in motornaher Position angeordnet ist.

**10.** Verfahren nach Anspruch 9, wobei abströmseitig zu einem Katalysator nach einem der Ansprüche 1 bis 8 ein unbeschichtetes oder ein eine katalytisch aktive Beschichtung enthaltendes Partikelfilter angeordnet ist.

**11.** Verfahren nach Anspruch 9, wobei abströmseitig zu einem Katalysator nach einem der Ansprüche 1 bis 8 ein SCR-Katalysator, sowie vor Eintritt in den SCR-Katalysator gegebenenfalls eine Vorrichtung zur Einbringung eines Reduktionsmittels in den Abgasstrang angeordnet ist.

**12.** Verfahren nach Anspruch 9, wobei abströmseitig zu einem Katalysator nach einem der Ansprüche 1 bis 8 ein Stickoxid-Speicherkatalysator angeordnet ist.

**Claims**

**1.** Nitrogen oxide storage catalyst composed of at least two catalytically active coatings on a support body, the lower coating applied directly to the support body comprising platinum as a catalytically active component applied to a homogeneous magnesium-aluminum mixed oxide with a magnesium oxide content between 5 and less than 28% by weight, based on the total weight of the magnesium-aluminum mixed oxide, in combination with a nitrogen oxide storage material, and the second layer applied thereto comprising palladium applied to aluminum oxide and barium oxide or strontium oxide, but not platinum,
**characterized in that**
the nitrogen oxide storage material comprises a nitrogen oxide storage component applied to a homogeneous magnesium-aluminum mixed oxide with a molar ratio of MgO to $Al_2O_3$ of 1.1:1.

**2.** Nitrogen oxide storage catalyst according to Claim 1,
**characterized in that**
the second layer does not comprise any oxygen-storing materials, and more particularly no cerium-zirconium mixed oxide.

**3.** Nitrogen oxide storage catalyst according to Claim 1 or 2,

EP 2 326 416 B1

**characterized in that**
in the second layer barium oxide or strontium oxide and palladium have been deposited together on the aluminum oxide support material.

4.  Nitrogen oxide storage catalyst according to any of Claims 1 to 3,
    **characterized in that**
    the nitrogen oxide storage components present are oxides, hydroxides, oxide hydroxides or carbonates of strontium or barium, or mixtures thereof.

5.  Nitrogen oxide storage catalyst according to Claim 4,
    **characterized in that**
    the magnesium-aluminum mixed oxide which has a molar ratio of MgO to $Al_2O_3$ of 1.1:1 and is used as support material for the nitrogen oxide storage component further comprises 0.5 to 20% by weight of cerium oxide or manganese oxide ($MnO_2$) or mixtures thereof, based on the total weight of said support material.

6.  Nitrogen oxide storage catalyst according to Claim 4 or 5,
    **characterized in that**
    the magnesium-aluminum mixed oxide used as support material for platinum further comprises 0.5 to 20% by weight of cerium oxide, based on the total weight of said support material.

7.  Nitrogen oxide storage catalyst according to Claim 6,
    **characterized in that**
    0.05 to 10% by weight of a further noble metal selected from gold, palladium and rhodium has additionally been applied to the magnesium-aluminum mixed oxide used as support material for platinum, based on the resulting total weight of noble metal and said support material.

8.  Nitrogen oxide storage catalyst according to Claim 1,
    **characterized in that**
    the lower coating applied directly to the support body additionally comprises a cerium/zirconium mixed oxide which has been coated with 0.05 to 5% by weight of rhodium or platinum and may comprise further rare earth metals selected from the group consisting of yttrium, lanthanum, praseodymium, neodymium, samarium and mixtures thereof, where the content stated is based on the total weight of noble metal and said cerium/zirconium mixed oxide.

9.  Process for cleaning the exhaust gases of gasoline engines with direct gasoline injection which are operated predominantly with a lean air/fuel mixture, by contacting the exhaust gases with a catalyst according to any of Claims 1 to 8 arranged in a close-coupled position.

10. Process according to Claim 9, wherein an uncoated particulate filter or a particulate filter comprising a catalytically active coating is arranged downstream of a catalyst according to any of Claims 1 to 8.

11. Process according to Claim 9, wherein an SCR catalyst, and upstream of entry to the SCR catalyst optionally an apparatus for introducing a reducing agent into the exhaust gas line, are arranged downstream of a catalyst according to any of Claims 1 to 8.

12. Process according to Claim 9, wherein a nitrogen oxide storage catalyst is arranged downstream of a catalyst according to any of Claims 1 to 8.

**Revendications**

1.  Catalyseur de stockage des oxydes d'azote constitué d'au moins deux revêtements catalytiquement actifs sur un corps support, le revêtement inférieur, appliqué directement sur le corps support, contenant du platine en tant que composant catalytiquement actif appliqué sur un oxyde mixte magnésium-aluminium homogène ayant une teneur en oxyde de magnésium comprise entre 5 et moins de 28 % en poids, par rapport au poids total de l'oxyde mixte magnésium-aluminium, en combinaison avec un matériau de stockage des oxydes d'azote, et
    la seconde couche appliquée sur celui-ci contenant du palladium appliqué sur de l'oxyde d'aluminium et de l'oxyde de baryum ou de l'oxyde de strontium, mais pas de platine,
    **caractérisé en ce que**

**11**

le matériau de stockage des oxydes d'azote contient un composant de stockage des oxydes d'azote appliqué sur un oxyde mixte magnésium-aluminium homogène ayant un rapport molaire entre MgO et Al$_2$O$_3$ de 1,1:1.

2. Catalyseur de stockage des oxydes d'azote selon la revendication 1, **caractérisé en ce que** la seconde couche ne contient pas de matériaux stockant l'oxygène, notamment pas d'oxyde mixte cérium-zirconium.

3. Catalyseur de stockage des oxydes d'azote selon la revendication 1 ou 2, **caractérisé en ce que**, dans la seconde couche, de l'oxyde de baryum ou de l'oxyde de strontium et du palladium sont déposés ensemble sur le matériau support oxyde d'aluminium.

4. Catalyseur de stockage des oxydes d'azote selon l'une quelconque des revendications 1 à 3, **caractérisé en ce que** des oxydes, hydroxydes, oxyhydroxydes ou carbonates de strontium ou de baryum, ou leurs mélanges, sont contenus en tant que composant de stockage des oxydes d'azote.

5. Catalyseur de stockage des oxydes d'azote selon la revendication 4, **caractérisé en ce que** l'oxyde mixte magnésium-aluminium ayant un rapport molaire entre MgO et Al$_2$O$_3$ de 1,1:1 utilisé en tant que matériau support pour le composant de stockage des oxydes d'azote contient également 0,5 à 20 % en poids d'oxyde de cérium ou d'oxyde de manganèse (MnO$_2$) ou leurs mélanges, par rapport au poids total de ce matériau support.

6. Catalyseur de stockage des oxydes d'azote selon la revendication 4 ou 5, **caractérisé en ce que** l'oxyde mixte magnésium-aluminium utilisé en tant que matériau support pour le platine contient également 0,5 à 20 % en poids d'oxyde de cérium, par rapport au poids total de ce matériau support.

7. Catalyseur de stockage des oxydes d'azote selon la revendication 6, **caractérisé en ce que** 0,05 à 10 % en poids d'un autre métal noble choisi dans le groupe constitué par l'or, le palladium et le rhodium est également appliqué sur l'oxyde mixte magnésium-aluminium utilisé en tant que matériau support pour le platine, par rapport au poids total résultant du métal noble et de ce matériau support.

8. Catalyseur de stockage des oxydes d'azote selon la revendication 1, **caractérisé en ce que** le revêtement inférieur, appliqué directement sur le corps support, contient également un oxyde mixte cérium/zirconium revêtu avec 0,05 à 5 % en poids de rhodium ou de platine, qui peut contenir d'autres métaux de terres rares choisis dans le groupe constitué par l'yttrium, le lanthane, le praséodyme, le néodyme, le samarium et leurs mélanges, la donnée de teneur se rapportant au poids total du métal noble et de cet oxyde mixte cérium-zirconium.

9. Procédé de purification des gaz d'échappement de moteurs automobiles à injection directe d'essence, qui sont principalement exploités avec un mélange air/carburant pauvre, par mise en contact des gaz d'échappement avec un catalyseur selon l'une quelconque des revendications 1 à 8, qui est placé à une position proche du moteur.

10. Procédé selon la revendication 9, dans lequel un filtre à particules non revêtu ou contenant un revêtement catalytiquement actif est placé en aval d'un catalyseur selon l'une quelconque des revendications 1 à 8.

11. Procédé selon la revendication 9, dans lequel un catalyseur SCR, ainsi qu'avant l'entrée dans le catalyseur SCR éventuellement un dispositif pour l'introduction d'un réducteur dans la conduite des gaz d'échappement, est placé en aval d'un catalyseur selon l'une quelconque des revendications 1 à 8.

12. Procédé selon la revendication 9, dans lequel un catalyseur de stockage des oxydes d'azote est placé en aval d'un catalyseur selon l'une quelconque des revendications 1 à 8.

Figur 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1317953 A
- EP 1316354 A
- EP 1317953 A1
- WO 2005092481 A
- EP 0945165 A
- EP 1181970 B
- EP 1181970 A